# EUROPEAN PATENT SPECIFICATION

(11) **EP 1 553 749 B1**
(45) Date of publication and mention of the grant of the patent: **17.03.2010**
(21) Application number: 05000279.9
(22) Date of filing: 07.01.2005
(51) Int. Cl.: H04M 1/02

(54) **Sliding mobile phone with camera**
Schiebendes bewegliches Telefon mit Kamera
Mobilphone glissant avec appareil-photo

(30) Priority: 09.01.2004 KR 2004001606
(43) Date of publication of application: 13.07.2005
(73) Proprietor: SK Teletech Co., Ltd., Seoul 135-984 (KR)
(72) Inventor: Back, Chul-Seung, Gwanak-gu Seoul 151-708 (KR)
(74) Representative: Liesegang, Eva

(56) References cited:
- EP-A- 0 963 100
- EP-A- 1 298 909
- EP-A- 1 307 030
- EP-A- 1 312 999
- JP-A- 2000 253 124
- US-A1- 2001 036 845
- US-A1- 2003 211 874

## Description

### BACKGROUND OF THE INVENTION

### 1. Field of the Invention

The present invention relates generally to automatic slide-up mobile phones and, more particularly, to an automatic slide-up mobile phone, which is capable of simultaneously opening or closing a cover body and rotating a camera, using a single motor. More particularly, the invention relates to an automatic slide-up mobile phone according to the preamble of claim 1. A mobile phone of this type is known from EP-A-0 963 100.

### 2. Description of the Related Art

As the use of mobile phones has been spread worldwide, mobile phones having various functions and designs have been produced and introduced to the market so as to meet the demand of consumers. Mobile phones have developed from bar-type mobile phones through flip-type mobile phones, flip up-type mobile phones, and folding-type mobile phones into the most advanced mobile phones, that is, slide-up mobile phones. Of the mobile phones, the folding-type mobile phones and the slide-up mobile phones have been widely used. A slide-up mobile phone is designed such that a cover body slides a predetermined distance in a longitudinal direction of the mobile phone to open. The slide-up mobile phone may be provided with a wide LCD module which has a size similar to that of a folding-type mobile phone. Further, the slide-up mobile phone is advantageous in that it is attractive to consumers, compared to conventional folding-type mobile phones.

US 2001/0036845 A1 discloses a flip up-type mobile phone including a main body and a cover which are coupled by a hinge device. A rotatable camera is integrated into the hinge device. A user can freely adjust the rotation angle of the camera by using an adjusting knob.

Similar prior art is disclosed in JP 2000-253124 A.

Recently, the function as well as the design of the slide-up mobile phone has increasingly developed. Owing to the development, automatic slide-up mobile phones have appeared. The automatic slide-up mobile phones are designed such that a cover body automatically moves to an open position or a closing position, without the user's manipulation.

Meanwhile, as communication technology and manufacturing technology of mobile phones have rapidly developed, there have been proposed mobile phones having various functions, including a gaming function, an internet search function, an e-mail function, and a payment function, in addition to normal voice communication. Recently, there has been a growing tendency for a camera function and a visual communication function to be added to a mobile phone. That is, a camera lens is mounted to the mobile phone to photograph an object. Moreover, the mobile phone having the visual communication function allows a user to photograph himself or herself using a camera and transmit the image to another person.

However, the conventional automatic slide-up mobile phones having the camera function are mostly constructed so that only a cover body is automatically opened or closed, or only a camera is automatically rotated while the cover body is manually opened or closed. Of course, a mobile phone has been proposed which is constructed to automatically open or close a cover body while automatically rotating a camera. However, such a mobile phone must have motors to control the operation of the cover body and the camera. Thus, the mobile phone is problematic in that the internal construction thereof is sophisticated and the power required to drive the motors is increased.

### SUMMARY OF THE INVENTION

Accordingly, the present invention has been made keeping in mind the above problems occurring in the prior art, and an object of the present invention is to provide an automatic slide-up mobile phone, which is provided with a drive unit having a single drive motor and a plurality of gears operated in conjunction with the drive motor, thus allowing the sliding motion of a cover body and the rotating motion of a camera to be simultaneously controlled.

In order to accomplish the above object, the present invention provides an automatic slide-up mobile phone, including a main body, a cover body mounted to a front surface of the main body and sliding in a longitudinal direction of the main body, a camera rotating to face forward and backward relative to the main body, and a drive unit to open or close the cover body while rotating the camera, as defined in claim 1. Preferred embodiments are defined in the dependent claims.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view to show an automatic slide-up mobile phone, according to the present invention;
FIG. 2a is an exploded perspective view of an automatic slide-up mobile phone, according to the first embodiment of the present invention;
FIG. 2b is an exploded perspective view to show a drive unit and a camera included in the mobile phone of FIG. 2a;
FIG. 3a is a view to show the mobile phone of the present invention, when a cover body of the mobile phone is closed;
FIG. 3b is a view to show the mobile phone of the present invention, when the cover body of the mobile phone is open;
FIG. 4a is a sectional view of the mobile phone shown in FIG. 3 a;
FIG. 4b is a sectional view of the mobile phone shown in FIG. 3b;
FIG. 5a is an exploded perspective view of an automatic slide-up mobile phone, according to the second embodiment of the present invention;
FIG. 5b is an exploded perspective view to show a drive unit and a camera included in the mobile phone of FIG. 5a;
FIG. 6a is a sectional view to show the mobile phone of FIG. 5a, when a cover body of the mobile phone is closed; and
FIG. 6b is a sectional view to show the mobile phone of FIG. 5a, when the cover body of the mobile phone is open.

### DESCRIPTION OF THE PREFERRED EMBODIMENTS

This invention will be described in further detail by way of example with reference to the accompanying drawings.

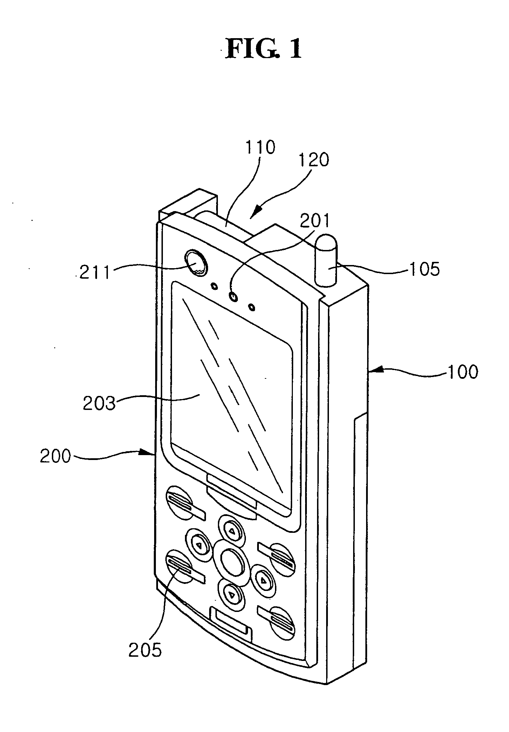

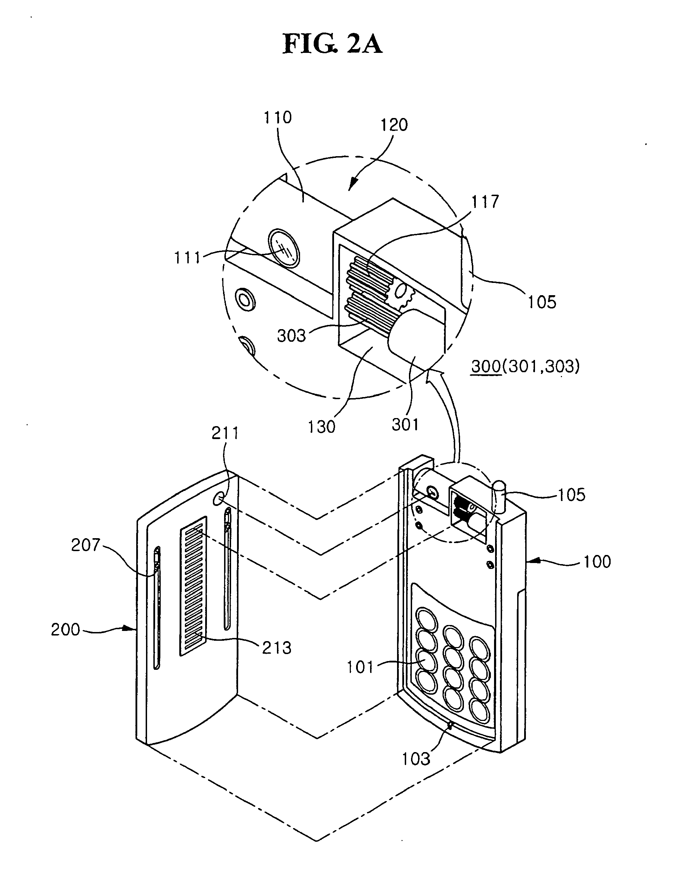

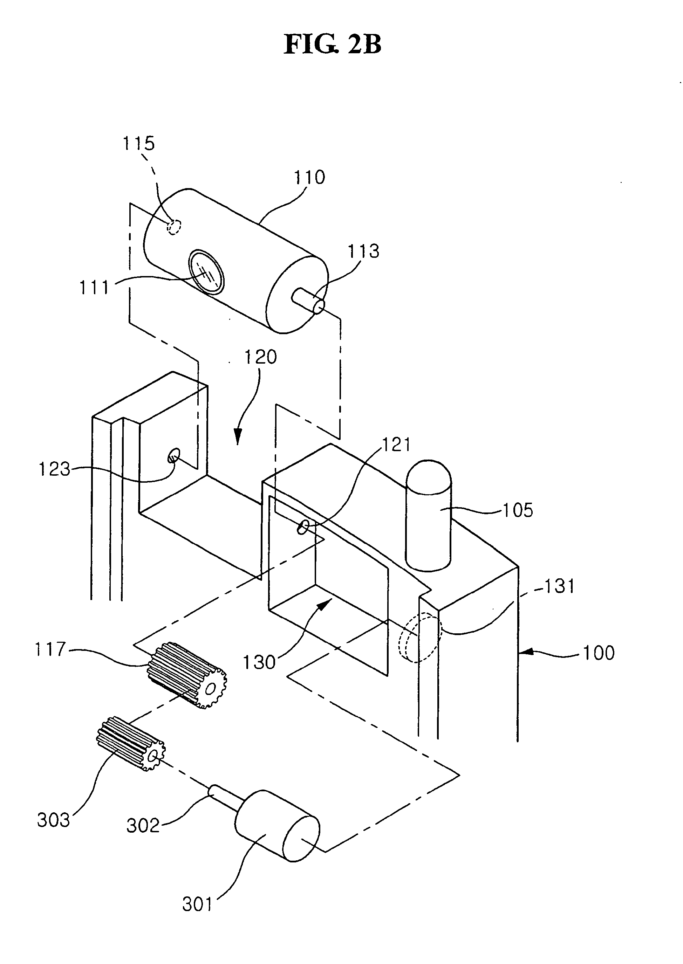

FIG. 1 shows an automatic slide-up mobile phone, according to the present invention, FIG. 2a is an exploded perspective view of an automatic slide-up mobile phone, according to the first embodiment of the present invention, and FIG. 2b is an exploded perspective view to show a drive unit and a camera included in the mobile phone of FIG. 2a.

As shown in the drawings, the automatic slide-up mobile phone of this invention includes a main body 100, a cover body 200, and a drive unit 300. The main body 100 includes a keypad 101 which is used to input various numbers or characters, a transmission part 103 which transmits sound, an antenna 105 which transceives electric waves, and a camera 110 which takes pictures. The cover body 200 includes an earpiece 201 which outputs sound, a liquid crystal display 203 which outputs an image, a plurality of function keys 205 which are used to input signals for desired functions, and a slide module 207 which is used to slide the cover body 200. The drive unit 300 controls the opening or closing of the cover body 200 and the rotation of the camera 110.

The main body 100 has a camera seat 120 and a drive unit chamber 130. The camera seat 120 is provided on an upper end of the main body 100 such that it is spaced apart from the antenna 105, and is opened at upper, front, and rear portions of the camera seat 120. Further, the drive unit chamber 130 is provided on an upper portion of the main body 100 at a position around the antenna 105, and is opened at the front of the drive unit chamber 130. A circular through hole 121 is bored through a center on a sidewall of the camera seat 120, which is positioned at a junction of the camera seat 120 and the drive unit chamber 130. A hemispherical depression 123 is formed at a center on an opposite sidewall of the camera seat 120. The camera 110 seated in the camera seat 120 has a cylindrical shape, with a camera lens 111 provided on a circumference of the camera 110. A camera rotating shaft 113 protrudes from a center of an end of the camera 110, and is inserted into the through hole 121. Further, a hemispherical protrusion 115 is provided at a center on an opposite end of the camera 110 to correspond to the hemispherical depression 123. In this case, the camera rotating shaft 113 and the hemispherical protrusion 115 are on the same line, thus serving as a central rotating axis of the camera 110.

The drive unit 300 includes a drive motor 301 which is seated in the drive unit chamber 130 to produce power, and a drive gear 303 which is coupled to a motor rotating shaft 302 of the drive motor 301. A first driven gear 117 is coupled to an end of the camera rotating shaft 113 which extends into the drive unit chamber 130. The drive gear 303 engages with the first driven gear 117. The drive motor 301 is seated in a motor seat 131 which is provided in a sidewall of the drive unit chamber 130.

The cover body 200 has a lens exposure opening 211. The lens exposure opening 211 is bored through the cover body 200 at a position corresponding to the camera 110, so that the camera lens 111 is exposed at the front of the cover body 200, when the cover body 200 is closed. The slide module 207 is provided on both sides of a rear surface of the cover body 200, thus allowing the sliding motion of the cover body 200. Further, a second driven gear 213 is provided on a central portion of the rear surface of the cover body 200 and is arranged in a longitudinal direction of the cover body 200. The second driven gear 213 engages with the drive gear 303. Since the general construction of the sliding module 207 remains the same as a module employed on a conventional slide-up mobile phone, the sliding module 207 will not be described herein in detail.

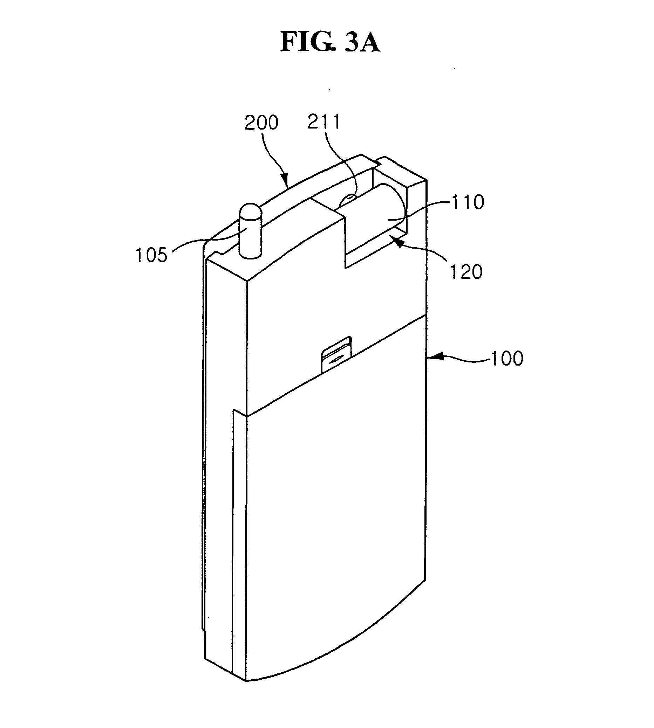

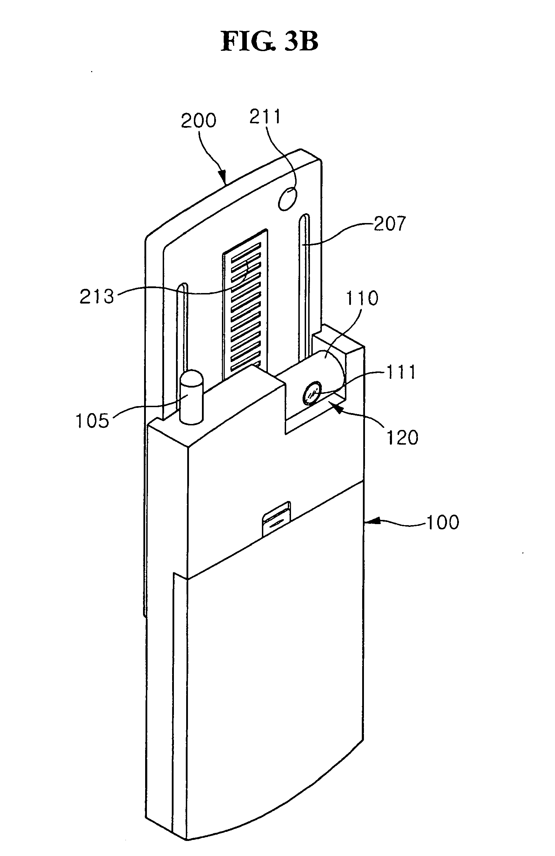

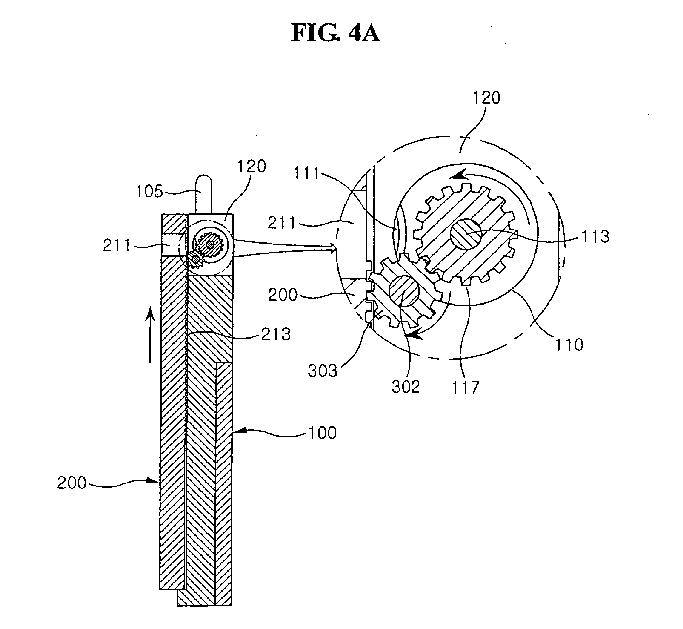

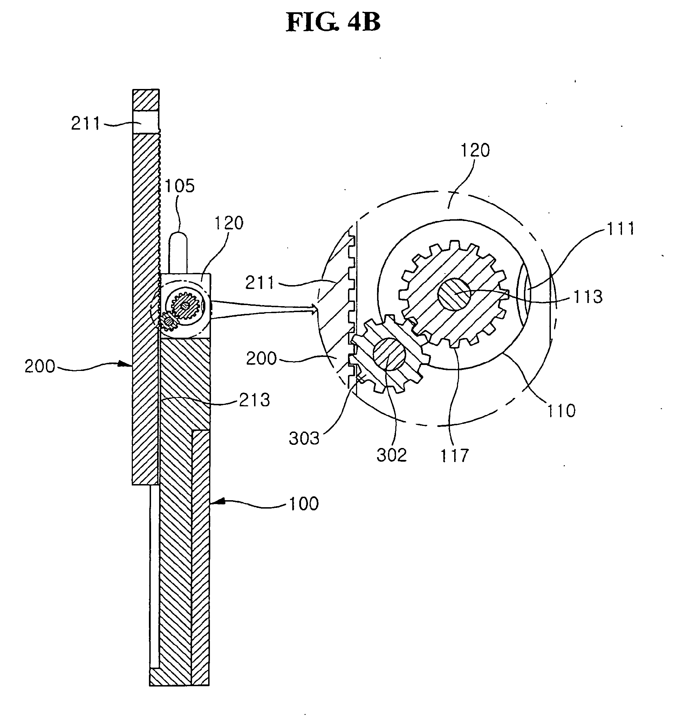

FIG. 3a is a view to show the mobile phone of the present invention, when the cover body is closed, FIG. 3b is a view to show the mobile phone of the present invention, when the cover body phone is open, and FIGS. 4a and 4b are sectional views to show the mobile phones of FIGS. 3a and 3b, respectively.

The drawings illustrate the opening or closing operation of the cover body and the rotating operation of the camera that are simultaneously controlled by the drive motor. Referring to the drawings, the drive unit 300 of the automatic slide-up mobile phone is configured such that part of the drive gear 303 coupled to the motor rotating shaft 302 of the drive motor 301 is positioned to protruded forward from a front surface of the main body 100. Further, the first driven gear 117, which is provided in the drive unit chamber 130 to rotate the camera 110, engages with the drive gear 303. The second driven gear 213 engages with the protruding part of the drive gear 303 to open or close the cover body 200 due to the rotation of the drive gear 303.

When an external signal is input to the mobile phone so as to open the cover body 200, the drive motor 301 is operated in response to the input signal, and the drive gear 303 starts rotating. The drive gear 303 rotates in a predetermined direction to open the cover body 200, while the first driven gear 117 engaging with the drive gear 303 rotates in a direction opposite to the rotational direction of the drive gear 303. The camera 110 also rotates in the same direction as that of the first driven gear 117. Thereby, the camera lens 111. which faces forward rotates about the camera rotating shaft 113. Simultaneously, the drive gear 303 moves the second driven gear 213 engaging with the protruding part of the drive gear 303, thus opening the cover body 200 having the second driven gear 213.

In this case, the drive gear 303 and the second driven gear 213 convert the rotation generated by the drive gear serving as a pinion gear into linear reciprocating motion via the second driven gear serving as a rack gear. In order to simultaneously complete one stroke of the linear motion of the cover body 200 and one stroke of the rotation of the camera 110, the gear ratio of the drive gear 303 to the first driven gear 117 and the gear ratio of the drive gear 303 to the second drive gear 213 must be appropriately determined.

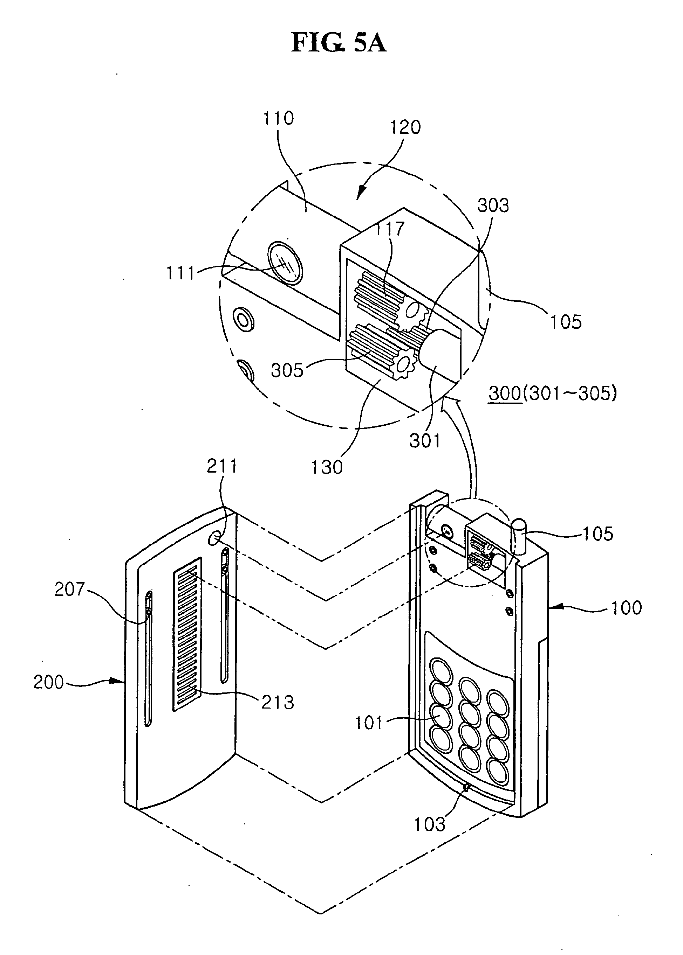

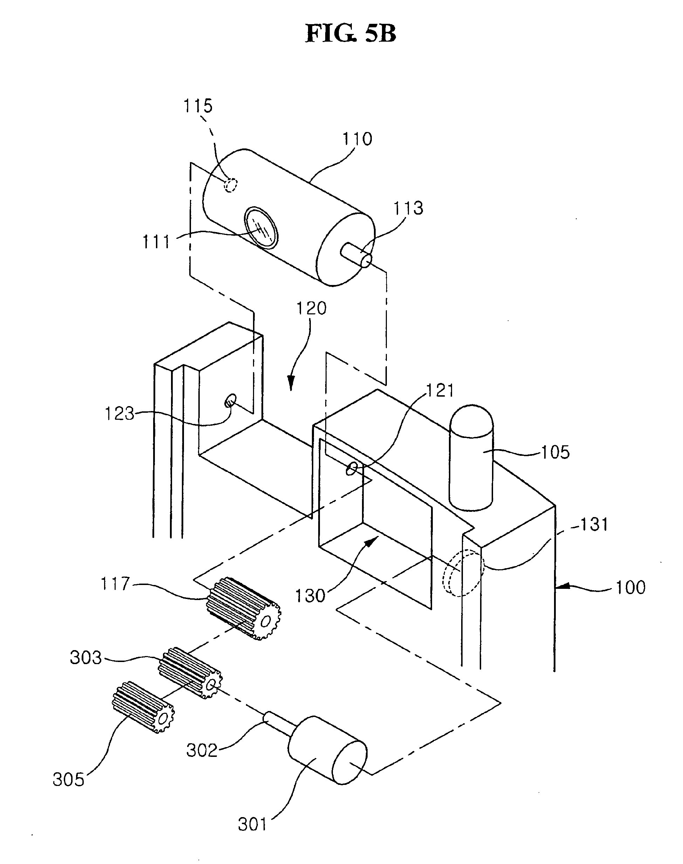

FIG. 5a shows an automatic slide-up mobile phone, according to the second embodiment of the present invention, and FIG. 5b is an exploded perspective view to show a drive unit and a camera included in the mobile phone of FIG. 5a.

Since the general construction of the second embodiment is equal to that of the first embodiment except for the drive unit, only the drive unit of the second embodiment will be described below.

A drive unit 300 is accommodated in the drive unit chamber 130 to generate power, and includes a drive motor 301, a drive gear 303, and an idle gear 305. A first driven gear 117 is coupled to an end of a camera rotating shaft 113 which extends into the drive unit chamber 130, and the drive gear 303 engages with the first driven gear 117. Further, the drive motor 301, coupled to the drive gear 303 to rotate the drive gear 303, is seated in a motor seat 131 which is provided in a sidewall of the drive unit chamber 130. The idle gear 305 is provided between the drive gear 303 and the second driven gear 213, and transmits the rotating motion from the drive gear 303 to the second driven gear 213 after changing the rotational direction of the drive gear 303. Similar to the drive gear 303 of the first embodiment, part of the idle gear 305 protrudes forward from the front surface of the main body 100 and engages with the second driven gear 213. The idle gear 305 is used to change the rotational direction of the gear or regulate the distance between the shafts.

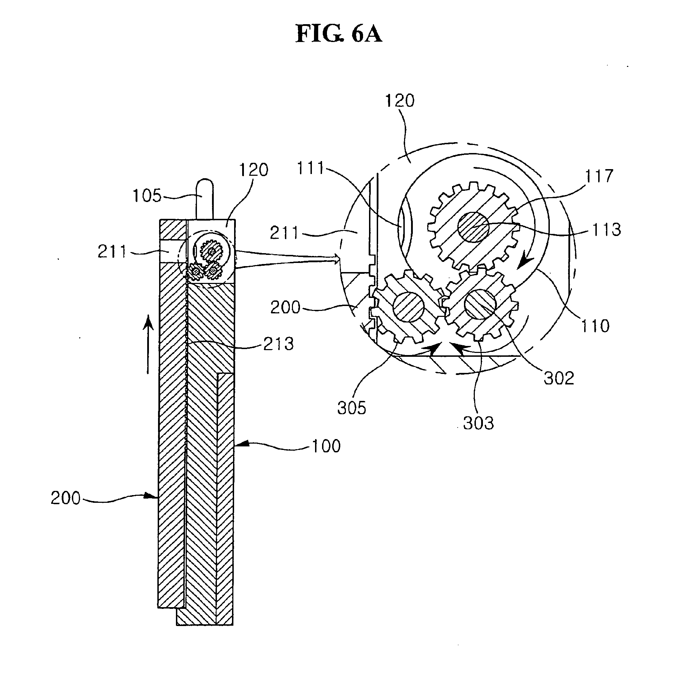

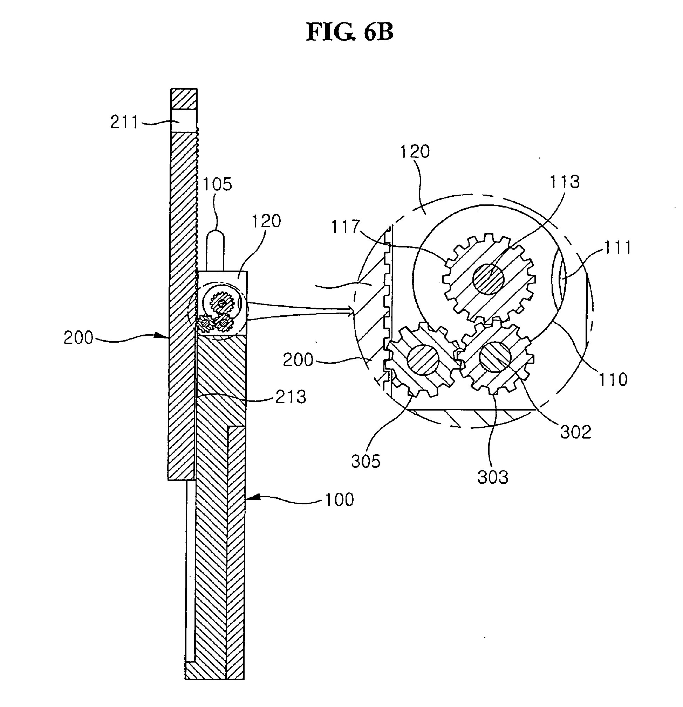

FIG. 6a is a sectional view to show the mobile phone of FIG. 5a when the cover body is closed, and FIG. 6b is a sectional view to show the mobile phone of FIG. 5a when the cover body is open.

The drawings illustrate the opening or closing operation of the cover body and the rotating motion of the camera that are simultaneously controlled by the drive motor. When an external signal is input to the mobile phone so as to open the cover body 200, the drive motor 301 is operated in response to the input signal, and the drive gear 303 starts rotating. The drive gear 303 rotates in a predetermined direction to open the cover body 200, while the first driven gear 117 engaging with the drive gear 303 rotates in a direction opposite to the rotational direction of the drive gear 303. The camera 110 also rotates in the same direction as that of the first driven gear 117. Thereby, the camera lens 111 which faces forward rotates about the camera rotating shaft 113. Simultaneously, the idle gear 305, which engages with the drive gear 303 and is at a predetermined angle with respect to the first driven gear 117 so as not to interfere with the first driven gear 117, rotates in the opposite direction to the rotational direction of the drive gear 303. The idle gear 305 moves the second driven gear 213 engaging with the protruding part of the idle gear 305, thus opening the cover body 200 having the second driven gear 213.

The cover body 200 and the camera 110 that are respectively opened and rotated through the above-mentioned methods are controlled by a single drive motor 300. In order to simultaneously complete one stroke of the linear motion of the cover body 200 and one stroke of the rotation of the camera 110, the gear ratio of the drive gear 303 to the first driven gear 117 and the gear ratio of the drive gear 303 to the second driven gear 213 must be appropriately controlled. When the cover body 200 has been completely opened, the camera lens 111 faces backwards.

The operation of closing the cover body 200 is performed by rotating the drive gear 303 in the opposite direction to the rotational direction of the drive gear 303 in the opening operation. When the cover body 200 has been completely closed, the camera lens 111 is located to face forward. The lens exposure opening 211 is positioned in front of the camera lens 111.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

As described above, the present invention provides an automatic slide-up mobile phone, which is capable of simultaneously controlling a sliding motion of a cover body and a rotating motion of a camera using a single drive motor and a plurality of gears, thus simplifying an interior of the mobile phone, and reducing the power required to drive the motor, therefore allowing a user to more conveniently make a call or take a photograph.

## Claims

1. An automatic slide-up mobile phone, comprising:
a main body (100); and
a cover body (200) mounted to a front surface of the main body (100), and sliding in a longitudinal direction of the main body (100); **characterized by**
a camera (110) rotating to face forwards and backwards relative to the main body (100); and
a drive unit (300) comprising a drive motor (301) configured to open or close the cover body (200) while rotating the camera.

2. The automatic slide-up mobile phone as set forth in claim 1, wherein said drive motor (301) is configured to generate power in response to an external signal; the drive unit further comprising:
a motor rotating shaft (302) coupled to the drive motor (301); and
a drive gear (303) coupled to the motor rotating shaft (302) to rotate the camera.

3. The automatic slide-up mobile phone as set forth in claim 2, wherein the camera (110) is mounted to the main body (100) such that a camera rotating shaft (113) of the camera (110) is perpendicular to a photographing direction, with a first driven gear (117) coupled to an end of the camera (110) to engage with the drive gear (303).

4. The automatic slide-up mobile phone as set forth in claim 2 or 3, wherein the cover body (200) comprises:
exposure means (211) to expose a camera lens (111) at a front of the cover body (200) when the cover body (200) is closed; and
a second driven gear (213) provided on a rear surface of the cover body (200) contacting the main body (100) to be arranged in a longitudinal direction of the cover body (200), and engaging with the drive gear (303).

5. The automatic slide-up mobile phone as set forth in claim 4, wherein the drive gear (303), the first driven gear (117), and the second driven gear (213) are configured so that a gear ratio of the drive gear (303) to the first driven gear (117) is different from a gear ratio of the drive gear (303) to the second driven gear (213), thus allowing one stroke of a linear motion of the cover body (200) and one stroke of a rotation of the camera (110) to be simultaneously completed.

6. The automatic slide-up mobile phone as set forth in claim 4, wherein the drive unit further comprises:
an idle gear (305) provided between the drive gear (303) and the first driven gear (117) or between the drive gear (303) and the second driven gear (213) to control a rotational direction of the driven gears (117, 213).

7. The automatic slide-up mobile phone as set forth in claim 6, wherein the drive gear (303), the first driven gear (117), and the second driven gear (213) are configured so that a gear ratio of the drive gear (303) to the first driven gear (117) is different from a gear ratio of the drive gear (303) to the second driven gear (213), thus allowing one stroke of a linear motion of the cover body (200) and one stroke of a rotation of the camera (110) to be simultaneously completed.

## Patentansprüche

1. Automatisch aufschiebbares Mobiltelefon mit folgenden Merkmalen:
ein Hauptkörper (100); und
ein Deckelkörper (200), der an einer Vorderseite des Hauptkörpers (100) angebracht und in einer Längsrichtung des Hauptkörpers (100) verschiebbar ist; **gekennzeichnet durch**:
eine Kamera (110), die drehbar ist, um sie relativ zu dem Hauptkörper (100) nach vorne und nach hinten zu richten; und
eine Antriebseinheit (300) mit einem Antriebsmotor (301), der dazu konfiguriert ist, den Deckelkörper (200) während der Drehung der Kamera zu öffnen oder zu schließen.

2. Automatisch aufschiebbares Mobiltelefon nach Anspruch 1, wobei der Antriebsmotor (301) dazu konfiguriert ist, abhängig von einem externen Signal eine Antriebskraft zu erzeugen, wobei die Antriebseinheit ferner umfasst:
eine Motor-Rotationswelle (302), die mit dem Antriebsmotor (301) gekoppelt ist, und
ein Antriebsrad (303), das mit der Motor-Rotationswelle (302) zum Drehen der Kamera gekoppelt ist.

3. Automatisch aufschiebbares Mobiltelefon nach Anspruch 1, wobei die Kamera (110) an dem Hauptkörper (100) derart angebracht ist, dass eine Kamera-Rotationswelle (113) der Kamera (110) senkrecht zu einer Fotografierrichtung steht, wobei ein erstes angetriebenes Rad (117) mit einem Ende der Kamera (110) gekoppelt ist, um mit dem Antriebsrad (303) in Eingriff zu kommen.

4. Automatisch aufschiebbares Mobiltelefon nach Anspruch 2 oder 3, wobei der Deckelkörper (200) umfasst:
eine Belichtungsvorrichtung (211) zum Freigeben einer Kameralinse (111) an einer Vorderseite des Deckelkörpers (200), wenn der Deckelkörper (200) geschlossen ist; und
ein zweites angetriebenes Rad (213), das an einer Rückseite des Deckelkörpers (200) in Kontakt mit dem Hauptkörper (100) vorgesehen und in einer Längsrichtung des Deckelkörpers (200) angeordnet ist und mit dem Antriebsrad (303) in Eingriff ist.

5. Automatisch aufschiebbares Mobiltelefon nach Anspruch 4, wobei das Antriebsrad (303), das erste angetriebene Rad (117) und das zweite angetriebene Rad (213) derart konfiguriert sind, dass sich das Übersetzungsverhältnis des Antriebsrades (303) zu dem ersten angetriebenen Rad (117) von dem Übersetzungsverhältnis des Antriebsrades (303) zu dem zweiten angetriebenen Rad (213) unterscheidet, so dass ein Hub einer linearen Bewegung des Deckelkörpers (200) und eine Hub einer Drehung der Kamera (110) gleichzeitig abgeschlossen werden.

6. Automatisch aufschiebbares Mobiltelefon nach Anspruch 4, wobei die Antriebseinheit ferner umfasst:
ein Lehrlaufrad (305), das zwischen dem Antriebsrad (303) und dem ersten angetriebenen Rad (117) oder zwischen dem Antriebsrad (303) und dem zweiten angetriebenen Rad (213) vorgesehen ist, um eine Drehbewegung der angetriebenen Räder (117, 213) zu steuern.

7. Automatisch aufschiebbares Mobiltelefon nach Anspruch 6, wobei das Antriebsrad (303), das erste angetriebene Rad (117) und das zweite angetriebene Rad (213) derart konfiguriert sind, dass sich das Übersetzungsverhältnis des Antriebsrades (303) zu dem ersten angetriebenen Rad (117) von dem Übersetzungsverhältnis des Antriebsrades (303) zu dem zweiten angetriebenen Rad (213) unterscheidet, so dass ein Hub einer linearen Bewegung des Deckelkörpers (200) und eine Hub einer Drehung der Kamera (110) gleichzeitig abgeschlossen werden.

## Revendications

1. Téléphone mobile coulissant automatique, comprenant :
un corps principal (100) ; et
un corps de couvercle (200) monté sur une surface avant du corps principal (100), et coulissant dans une direction longitudinale du corps principal (100) ; **caractérisé par**
un appareil photo (110) tournant pour s'orienter vers l'avant et vers l'arrière par rapport au corps principal (100) ; et
une unité d'entraînement (300) comprenant un moteur d'entrainement (301) agencé pour ouvrir ou fermer le corps de couvercle (200) pendant la rotation de l'appareil photo.

2. Téléphone mobile coulissant automatique selon la revendication 1, dans lequel le moteur d'entraînement (301) est agencé pour fournir de la puissance en réponse à un signal externe, l'unité d'entraînement comprenant en outre :
un arbre rotatif de moteur (302) couplé au moteur d'entraînement (301) ; et
un engrenage d'entraînement (303) couplé à l'arbre rotatif de moteur (302) pour faire tourner l'appareil photo.

3. Téléphone mobile coulissant automatique selon la revendication 2, dans lequel l'appareil photo (110) est monté sur le corps principal (100) de telle sorte qu'un arbre rotatif d'appareil photo (113) de l'appareil photo (110) est perpendiculaire à une direction de photographie, avec un premier engrenage entraîné (117) couplé à une extrémité de l'appareil photo (110) pour s'engager avec l'engrenage d'entraînement (303).

4. Téléphone mobile coulissant automatique selon la revendication 2 ou 3, dans lequel le corps de couvercle (200) comprend :
des moyens d'exposition (211) pour exposer une lentille d'appareil photo (111) à l'avant du corps de couvercle (200) lorsque le corps de couvercle (200) est fermé ; et
un deuxième engrenage entraîné (213) prévu sur une surface arrière du corps de couvercle (200) contactant le corps principal (100) pour être agencé dans une direction longitudinale du corps de couvercle (200), et s'engageant avec l'engrenage d'entraînement (303).

5. Téléphone mobile coulissant automatique selon la revendication 4, dans lequel l'engrenage d'entraînement (303), le premier engrenage entraîné (117), et le deuxième engrenage entraîné (213) sont agencés de telle sorte qu'un rapport d'engrenage entre l'engrenage d'entraînement (303) et le premier engrenage entraîné (117) est différent d'un rapport d'engrenage entre l'engrenage d'entraînement (303) et le deuxième engrenage entraîné (213), ce qui permet qu'une course d'un mouvement linéaire du corps de couvercle (200) et une course d'une rotation de l'appareil photo (110) soient effectuées simultanément.

6. Téléphone mobile coulissant automatique selon la revendication 4, dans lequel l'unité d'entraînement comprend en outre :
un engrenage libre (305) prévu entre l'engrenage d'entraînement (303) et le premier engrenage entraîné (117) ou entre l'engrenage d'entraînement (303) et le deuxième engrenage entraîné (213) pour contrôler une direction de rotation des engrenages entraînés (117, 213).

7. Téléphone mobile coulissant automatique selon la revendication 6, dans lequel l'engrenage d'entraînement (303), le premier engrenage entraîné (117), et le deuxième engrenage entraîné (213) sont agencés de sorte que le rapport d'engrenage entre l'engrenage d'entraînement (303) et le premier engrenage entraîné (117) est différent du rapport d'engrenage entre l'engrenage d'entraînement (303) et le deuxième engrenage entraîné (213), ce qui permet qu'une course d'un mouvement linéaire du corps de couvercle (200) et une course d'une rotation de l'appareil photo (110) soient effectuées simultanément.
